## Europäisches Patentamt
## European Patent Office
## Office européen des brevets

(19)

(11) Veröffentlichungsnummer: **0 330 190**
**A2**

(12) # EUROPÄISCHE PATENTANMELDUNG

(21) Anmeldenummer: **89103125.4**

(22) Anmeldetag: **23.02.89**

(51) Int. Cl.⁴: **H04B 9/00**

(30) Priorität: **26.02.88 DE 3806021**

(43) Veröffentlichungstag der Anmeldung:
**30.08.89 Patentblatt 89/35**

(84) Benannte Vertragsstaaten:
**AT BE CH DE ES FR GB IT LI NL SE**

(71) Anmelder: **Standard Elektrik Lorenz Aktiengesellschaft**
**Lorenzstrasse 10**
**D-7000 Stuttgart 40(DE)**

(84) **DE**

Anmelder: **ALCATEL N.V.**
**Strawinskylaan 537 (World Trade Center)**
**NL-1077 XX Amsterdam(NL)**

(84) **BE CH ES FR GB IT LI NL SE AT**

(72) Erfinder: **Heide, Josef**
**Schubertstrasse 8**
**D-7062 Rudersberg(DE)**
Erfinder: **Höhn, Jürgen**
**Vorhofstrasse 12**
**D-7257 Ditzingen(DE)**

(74) Vertreter: **Kugler, Hermann, Dipl.-Phys. et al**
**Standard Elektrik Lorenz AG Patent- und Lizenzwesen Postfach 30 09 29**
**D-7000 Stuttgart 30(DE)**

(54) **Optische Übertragungseinrichtung zum Senden und Empfangen von optischen Signalen bei der Nachrichtenübertragung über einen Lichtwellenleiter.**

(57) Zur optischen Nachrichtenübertragung über Lichtwellenleiter werden üblicherweise optische Senderschaltungen mit Halbleiter-Sendeelementen, z.B. Laserdioden, und optische Empfängerschaltungen mit Fotodioden verwendet. Erfindungsgemäß wird eine optische Senderschaltung mit einem Halbleiter-Sendeelement in einer zweiten Betriebsart auch zum Empfangen von optischen Signalen verwendet. Dabei wird die durch den Treiber (LT) bewirkte Steuerung des Halbleiter-Sendeelements (L) abgeschaltet und das Halbleiter-Sendeelement (L) als optisch-elektrischer Wandler betrieben. Eine vorteilhafte Anwendung der Erfindung ist die bidirektionale optische Übertragung über einen einzigen Lichtwellenleiter, wobei in den beiden Richtungen abwechselnd ge-sendet und empfangen wird.

Durch die Doppelverwendung des Halbleiter-Sendeelements erübrigen sich die normalerweise zum Empfangen verwendete spezielle Empfangsdiode und in der Anwendung in einem bidirektionalen System weitere optische Bauelemente zur Richtungs- und Wellenlängentrennung.

FIG.1

## Optische Übertragungseinrichtung zum Senden und Empfangen von optischen Signalen bei der Nachrichtenübertragung über einen Lichtwellenleiter

Die Erfindung betrifft eine optische Übertragungseinrichtung nach dem Oberbegriff des Anspruchs 1 und ein optisches Nachrichtenübertragungssystem nach dem Oberbegriff des Patentanspruchs 4.

Eine derartige Übertragungseinrichtung und ein System mit zwei solchen Übertragungseinrichtungen ist bekannt aus ntz Bd. 39 (1986) Heft 7, S. 484 - 489, insbesondere aus Bild 2 auf S. 485. Für die Breitbandsignale hat die dort gezeigte Übertragungseinrichtung einen auf einer ersten Wellenlänge arbeitenden optischen Sender und einen auf einer zweiten Wellenlänge arbeitenden optischen Empfänger, ebenso für die Schmalbandsignale. Zur Richtungstrennung der in den beiden Übertragungsrichtungen übertragenen optischen Signale verschiedener Wellenlänge dient ein Wellenlängenmultiplexer/-Demultiplexer, so daß die gezeigte Übertragungseinrichtung gleichzeitig senden und empfangen kann und die Übertragung über den Lichtwellenleiter in beiden Richtungen erfolgt.

Ein solches Wellenlängenmultiplex-System stellt hinsichtlich des Wellenlängenmultiplexers/-demultiplexers einen beträchtlichen Aufwand dar und erfordert als optische Sender und Empfänger z.B. auf verschiedene Wellenlängen abgestimmte Halbleiter-Bauelemente sowie enventuelle weitere Selektionselemente für die Richtungs- und Wellenlängentrennung.

Es ist daher die Aufgabe der Erfindung, eine einfachere Übertragungseinrichtung und ein damit aufgebautes Übertragungssystem anzugeben, wobei die Übertragungseinrichtung ebenfalls zum Senden und zum Empfangen geeignet sein soll und aus zwei solchen Übertragungseinrichtungen ebenfalls ein optisches Nachrichtenübertragungssystem zur doppelt gerichteten Nachrichtenübertragung über einen einzigen Lichtwellenleiter aufgebaut werden kann.

Hinsichtlich der Übertragungseinrichtung wird die Aufgabe wie im Patentanspruch 1 angegeben gelöst. Weiterbildungen sind den Unteransprüchen entnehmbar. Ein aus zwei erfindungsgemäßen Übertragungseinrichtungen aufgebautes Übertragungssystem ist Gegenstand des Patentanspruchs 4.

Die Erfindung wird nun beipielsweise näher erläutert.

Es zeigen:

Fig.1 das Prinzipschaltbild der erfindungsgemäßen optischen Übertragungseinrichtung im Betriebszustand "Senden" und im Betriebszustand "Empfangen" und

Fig.2 ein aus zwei Übertragungseinrichtungen nach Fig.1 aufgebautes Übertragungssystem mit abwechslungsweiser Übertragung in den beiden Richtungen.

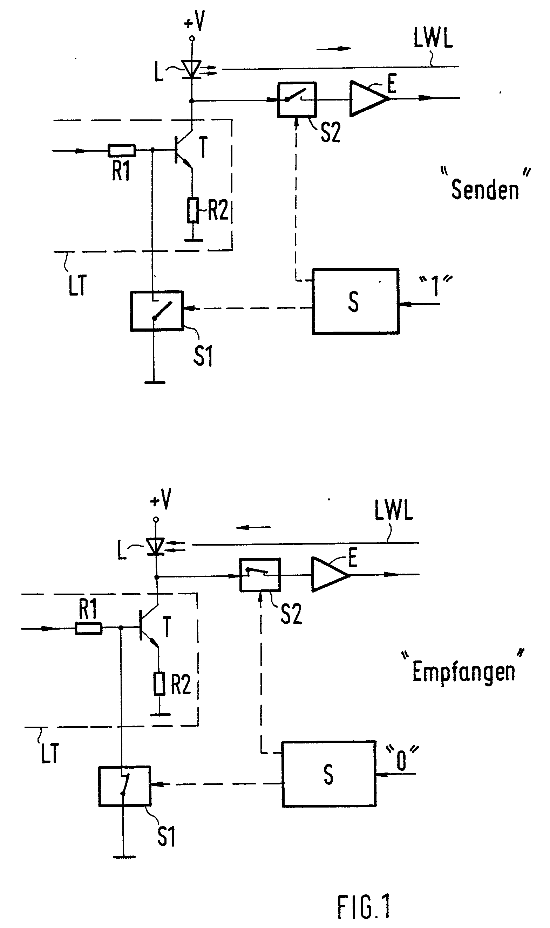

Fig.1 zeigt in einem oberen und in einem unteren Teil zweimal dieselbe Schaltungsanordnung, im oberen Teil in einer ersten Betriebsart und im unteren Teil in einer zweiten Betriebsart. Beschrieben wird im folgenden der obere Teil.

Die Figur zeigt eine Laserdiode L, deren Anode an einer positiven Vorspannung liegt und deren Kathode von einem Lasertreiber LT angesteuert wird. Der Lasertreiber LT ist die gestrichelt umrahmte Schaltung, bestehend aus einem Transistor T und zwei Widerständen R1 und R2, wobei der Kollektor des Transistors T mit der Kathode der Laserdiode L verbunden ist, der Emitter über den Widerstand R2 mit Masse verbunden ist und die Basis über den Widerstand R1 durch die zu übertragenden Datensignale angesteuert wird.

Das folgende Ausführungsbeispiel bezieht sich auf eine Laserdiode, die mit L bezeichnet ist. Statt einer Laserdiode kann die erfindungsgemäße Schaltungsanordnung jedoch irgendein beliebiges Halbleiter-Sendeelement oder eine lichtemittierende Diode, LED genannt, enthalten.

Bei jedem auf die Basis des Transistors T gelangenden Eingangsimpuls wird die Kollektor-Emitter-Strecke des Transistors T leitend, so daß durch die Laserdiode L ein Strom fließt und die Laserdiode kohärentes Licht abstrahlt, wenn der Strom ihre Laserschwelle überschreitet. Dieses Licht wird über einen Lichtwellenleiter LWL zur nicht gezeigten Gegenstation übertragen.

Soweit bisher beschrieben, handelt es sich bei der Schaltungsanordnung nach Fig.1 um die typische bekannte Grundschaltung eines optischen Senders. Die beschriebene Betriebsart ist die normale Betriebsart des Sendens von optischen Signalen entsprechend elektrischen Eingangssignalen.

Erfindungsgemäß hat diese Schaltungsanordnung jedoch eine zweite Betriebsart, in der sie als optisch-elektrischer Wandler für die über den Lichtwellenleiter von der Gegenstation empfangenen optische Signale wirkt. Damit die Schaltung in dieser zweiten Betriebsart arbeiten kann, ist die Kathode der Laserdiode nicht nur, wie üblich, an den Lasertreiber angeschlossen, sondern über einen Schalter S2 oder auch direkt mit dem Eingang eines Empfangsverstärkers E verbunden, und die Basis des Transistors T des Lasertreibers ist über einen Schalter S1 mit Masse verbunden. Bei der oben beschriebenen normalen Betriebsart "Senden" sind beide Schalter S1 und S2 geöffnet, so daß die Schaltungsanordnung in der normalen Betriebsart eines optischen Senders arbeitet.

Werden, wie im unteren Teil der Fig.1 gezeigt, die beiden Schalter S1 und S2 geschlossen, so liegt die Basis des Transistors T an Masse. Damit wird der Lasertreiber unempfindlich gegen weitere Eingangssignale, und der darin befindliche Transistor T wird zu einem hochohmigen Widerstand für den durch die Laserdiode fließenden Strom. Die Laserdiode wird also bei geschlossenem Schalter S1 nicht mehr durch den Treiber gesteuert, kann also kein Licht mehr aussenden. Trifft nun von der Gegenstation über den Lichtwellenleiter LWL empfangenes Licht auf die Laserdiode, so bewirkt dies, daß in der Laserdiode L durch Absorption von Lichtquanten in der aktiven Zone des Halbleiter-Sendeelements ein Strom erzeugt wird. Dieser Strom fließt nun über den geschlossenen Schalter S2 in den Empfangsverstärker E.

Aus der vorstehenden Erläuterung des unteren Teils der Fig.1 folgt, daß infolge der geschlossenen Schalter S1 und S2 eine Betriebsart vorliegt, in der die Schaltung gleich der typischen Grundschaltung eines optischen Empfängers ist (z.B. bekannt aus FREQUENZ 32 (1978), 12, S.340 - 346, Fig. 4 auf S. 341), bei der das optische Empfangselement einerseits an einer Vorspannung liegt und andererseits über einen Widerstand mit Masse und mit dem Eingang des Empfangsverstärkers verbunden ist.

Die Empfindlichkeit der Laserdiode in der in Fig.1 unten gezeigten untypischen Betriebsart als "Empfangsdiode" ist geringer als die Empfindlichkeit echter, d.h. spezieller Empfangsdioden, jedoch ausreichend für Übertragungen über kurze bis mittlere Entfernungen. Die Empfindlichkeit hängt unter anderem davon ab, wieviel Licht aus dem Lichtwellenleiter in die aktive Zone des Halbleiter-Sendeelements eingekoppelt wird. Hohe Empfindlichkeiten werden daher von flächenemittierenden lichtemittierenden Dioden (LED) erreicht. Kantenemitter sind vorwiegend in Verbindung mit Monomode-Lichtwellenleitern geeignet.

Besonders hohe Empfindlichkeiten werden erreicht, wenn der Laser über eine Linse, die sich auch am Ende des Lichtwellenleiters befinden kann, an den Lichtwellenleiter angekoppelt wird.

Um die Schaltungsanordnung nach Fig.1 in die Betriebsart "Senden" oder in die Betriebsart "Empfangen" zu schalten, ist eine Betriebsartensteuerung S vorhanden, die, gesteuert über ein für die eine oder andere Betroebsart typisches binäres Steuersignal ("1" oder "0"), Steuersignale an die Schalter S1 und S2 abgibt, die diese Schalter öffnen oder schließen. Im gezeigten Beispiel bewirkt ein Steuersignal mit dem logischen Pegel "1" am Eingang der Betriebsartensteuerung S, daß die Schalter S1 un S2 geöffnet werden und somit die "normale", d.h. bestimmungsmäßige Betriebsart "Senden" eingestellt wird. Bei Anlegen eines Steuersignals mit dem logischen Pegel "0" am Eingang der Betriebsartensteuerung S werden die beiden Schalter S1 und S2 geschlossen, wodurch die zweite, untypische Betriebsart "Empfangen" eingestellt wird.

Die Schalter S1 und S2 sowie die Betriebsartensteuerung S sind einfache elektronische Schaltungsteile, deren Realisierung, im Gegensatz zu den bei bekannten Systemen verwendeten optischen Komponenten, technologisch unproblematisch ist.

Die Abschaltung der durch den Treiber bewirkten Steuerung des Halbleiter-Sendeelements kann auch anders als über den Schalter S1 erreicht werden. Wenn der Transistor T in einer Schaltung (Basis- oder Emitterschaltung) betrieben wird, bei der der Kollektor eine ausreichend hochohmige Stromquelle darstellt, so genügt es, das an seiner Basis anliegende Ansteuersignal abzuschalten, und es ist nicht erforderlich, die Basis an Masse zu legen.

Ist die Laserdiode L, wie in Fig.1 gezeigt, in Durchlaßrichtung vorgespannt, so steigt die an ihr liegende Spannung logarithmisch, also bei hoher optischer Eingangsleistung flach, mit der optischen Eingangsleistung an. Damit ist in der Betriebsart "Empfangen" der Empfangsverstärker E gegen Übersteuerung geschützt.

Wie oben angedeutet, kann auf den Schalter S2 auch verzichtet werden, so daß der Empfangsvertärker ständig direkt mit der Laserdiode verbunden ist. Eine solche Schaltungsvariante ist möglich, wenn der Empfangsverstärker E den während der Betriebsart "Senden" in ihn fließenden Strom, ohne daß unzulässige Sättigungseffekte oder sogar ein Schaden auftritt, vertragen kann.

Zusätzlich zu den gezeigten Schaltern, kann ein dritter, nicht gezeigter Schalter vorhanden sein, mittels dessen die Laserdiode L im Empfangszustand zur Verringerung ihrer Kapazität in Sperrichtung vorgespannt werden kann, wie dies auch bei Fotodioden üblicherweise der Fall ist. Eine solche Umkehrung der Vorspannung in der Betriebsart "Empfangen" ist insbesondere bei höheren Bitfolgefrequenzen notwendig.

Für die vorstehend beschriebene Schaltung, die, wie Fig.1 zeigt, sowohl zum Senden als auch zum Empfangen verwendbar ist, gibt es die folgenden Anwendungsfälle:
Mit der erfindungsgemäßen optischen Übertragungseinrichtung kann ein bidirektionales optisches Nachrichtenübertragungssystem aufgebaut werden, bei dem über einen einzigen Lichtwellenleiter abwechslungsweise eine Übertragung in der einen und eine Übertragung in der anderen Richtung erfolgt. Solche abwechslungsweise bidirektional arbeitenden Systeme werden bisweilen auch als "Ping-Pong-Systeme" bezeichnet.

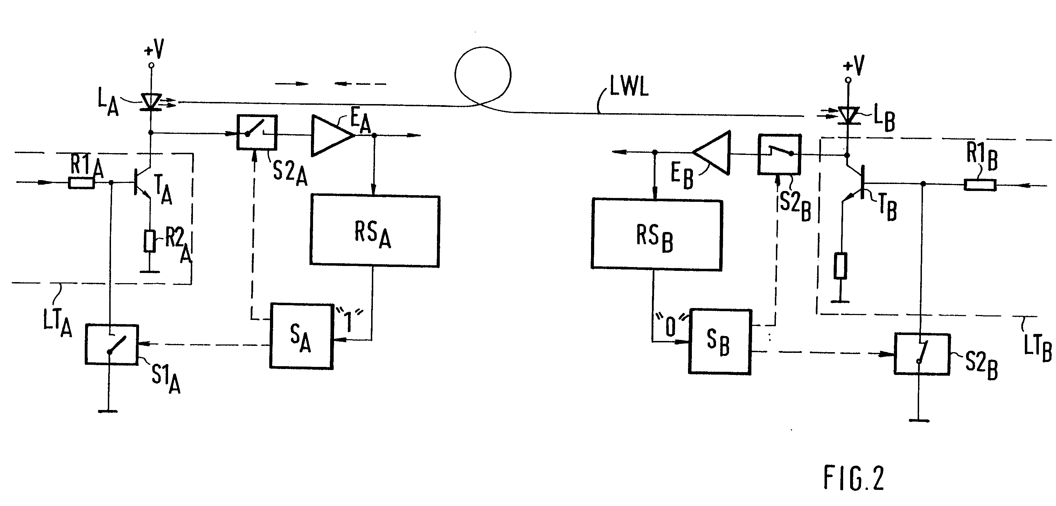

In Fig. 2 ist ein solches erfindungsgemäßes System dargestellt. Es besteht aus zwei exakt gleichen optischen Übertragungseinrichtungen, die durch einen Lichtwellenleiter LWL miteinander verbunden sind. Jede der Übertragungseinrichtungen ist genau gleich der in Fig. 1 gezeigten Übertragungseinrichtung, wobei die entsprechenden Teile mit den gleichen Bezugszeichen jedoch einem Index A auf der Linken Seite und einem Index B auf der rechten Seite bezeichnet sind. Die auf der linken Seite gezeigte Übertragungseinrichtung befindet sich in der Betriebsart "Senden", während sich die auf der rechten Seite dargestellte Übertragungseinrichtung in der Betriebsart "Empfangen" befindet. Dies wird abwechslungsweise umgekehrt, so daß sich die Übertragungsrichtung abwechslungsweise umkehrt.

Das am Eingang der Betriebsartensteuerung $S_A$ oder $S_B$ anliegende logische Steuersignal, dessen Binärzustand die Übertragungseinrichtung entweder senden oder empfangen läßt, wird in dem bidirektionalen Übertragungssystem nach Fig. 2 von einer Richtungssteuerung $RS_A$ oder $RS_B$ erzeugt. Diese Richtungssteuerung bestimmt, ob die betreffende Übertragungseinrichtung sich gerade in der Betriebsart "Senden" oder in der Betriebsart "Empfangen" befindet und wann die Betriebsart gewechselt wird. Jeweils nach Aussenden oder Empfangen eines Datenblocks mit vorgegebener Bitanzahl veranlaßt die Richtungssteuerung in jeder der beiden Übertragungseinrichtungen den Wechsel der Betriebsart und kehrt dadurch die Übertragungsrichtung um. Prinzipiell funktioniert diese Richtungssteuerung wie bei bekannten elektrischen Übertragungssystemen, bei denen über eine elektrische Leitung abwechselnd Nachrichten in der einen und in der anderen Übertragungsrichtung übertragen werden. Eine nähere Erläuterung ist für das Verständnis der vorliegenden Erfindung daher nicht notwendig. Für ein elektrisches System ist eine solche Richtungssteuerung beispielsweise bekannt aus der DE-OS 25 11 619.

Ein weiterer Anwendungsfall für die erfindungsgemäße Übertragungseinrichtung ist auch bei optischen Nachrichtenübertragungssystemen möglich, bei denen nur in einer einzigen Richtung Nachrichten zu übertragen sind. Wird eine solche Strecke zwischen zwei Punkten A und B aufgebaut und liegt zum Zeitpunkt des Aufbaus noch nicht fest, ob von A nach B oder von B nach A gesendet werden soll, so können beide Stationen A und B mit derselben Übertragungseinrichtung ausgestattet werden und erst bei Inbetriebnahme kann die gewünschte Betriebsart der beiden Übertragungseinrichtungen durch das geeignete Steuersignal an der Betriebsartensteuerung S eingestellt werden. In diesem Falle erübrigt es sich, in der Fertigung zwischen einer optischen Sendeeinrichtung und einer optischen Empfangseinrichtung zu unterscheiden, da die neue Übertragungseinrichtung wie beschrieben in beiden Betriebsarten betrieben werden kann.

## Ansprüche

1. Optische Übertragungseinrichtung zur Nachrichtenübertragung über einen Lichtwellenleiter (LWL) mit einem über einen Treiber (LT) gesteuerten Halbleiter-Sendeeleme nt (L) und einem Empfangsverstärker (E), **dadurch gekennzeichnet,** daß eine Betriebsart einstellbar ist, in der die durch den Treiber (LT) bewirkte Steuerung des Halbleiter-Sendeelements (L) abgeschaltet ist und das Halbleiter-Sendeelement (L) als optisch-elektrischer Wandler für das vom Lichtwellenleiter (LWL) empfangene optische Signal betrieben wird.

2. Übertragungseinrichtung nach Anspruch 1, dadurch gekennzeichnet, daß der Empfangsverstärker (E) mit dem Verbindungspunkt zwischen dem Halbleiter-Sendeelement (L) und dem Treiber (LT) verbunden ist und daß zum Betreiben des Halbleiter-Sendeelements (L) als optisch-elektrischer Wandler der Treiber derart beschaltet wird, daß er für den durch das Halbleiter-Sendeelement (L) fließenden Strom ein hochohmiger Widerstand ist.

3. Übertragungseinrichtung nach Anspruch 2, dadurch gekennzeichnet, daß dem Empfangsverstärker (E) ein Schalter (S2) vorgeschaltet ist, der in der Betriebsart, in der das Halbleiter-Sendeelement (L) bestimmungsgemäß als elektrisch-optischer Wandler betrieben wird, die Verbindung zwischen dem Halbleiter-Sendeelement (L) und dem Empfangsverstärker (E) unterbricht.

4. Optisches Nachrichtenübertragungssystem zur zweiseitig gerichteten Nachrichtenübertragung zwischen zwei durch einen einzigen Lichtwellenleiter (LWL) miteinander verbundenen Übertragungseinrichtungen, wobei jede Übertragungseinrichtung ein Halbleiter-Sendeelement ($L_A$, $L_B$) mit einem Treiber ($LT_A$, $LT_B$) und einen Empfangsverstärker ($E_A$, $E_B$) enthält, **dadurch gekennzeichnet,** daß es Übertragungseinrichtungen nach einem der vorstehenden Ansprüche enthält, daß jede der Übertragungseinrichtungen eine Steuerung ($RS_A$, $RS_B$) enthält, die die Übertragungseinrichtung abwechselnd senden und empfangen läßt, so daß die Nachrichtenübertragung abwechselnd in der einen und in der anderen Richtung erfolgt (Fig.2).

FIG.1

"Senden"

"Empfangen"

J.Heide 1-1
5. 5. 88

FIG.2

J. Heide 1-1